# EUROPEAN PATENT APPLICATION

(11) **EP 2 699 026 A1**
(43) Date of publication of application: **19.02.2014**
(21) Application number: 13460044.4
(22) Date of filing: 09.07.2013
(51) Int. Cl.: H04W 4/00, H04W 4/22

(54) **An automatic danger notification method and system for mobile network subscribers**

(30) Priority: 18.07.2012 PL 40002612
(71) Applicant: Telekomunikacja Polska S.A., 00-105 Warszawa (PL)
(72) Inventor: Nowinski, Bartlomiej, 96-314 Baranów (PL)
(74) Representative: Wazynska, Miroslawa

(57) **Abstract**

The present invention relates to automatic danger notification method for mobile network subscribers, characterized in that at the moment when the danger takes place, the type of danger and operations associated therewith are entered into the SIM alarm server (2). The SIM alarm server (2) is then connecting to the GIS system base (3) to determine the Cell_ID identification numbers of the BTS base stations (5) and the transmitted signal is being transformed into a distributing signal. In the next step, the distributing signal is being transmitted to the BSC base station controller (4), further to the BTS base stations (5) and consecutively to the mobile terminals (6). By means of a mobile terminal (6) the received message is further transmitted into the SIM-card (7) wherein signal is being transformed and the selected operations are being realized depending on the conveyed information. The invention also relates to the automatic danger notification system for mobile network subscribers wherein a SIM alarm server (2) is located between the BSC base station controller (4) and the transmitting unit of the alarm service (1) connected to the GIS geographic information system (3).

## Description

The object of the invention is an automatic danger notification method and system for mobile network subscribers, based on the GSM global portable communication system standard and utilising the SIM-card as well as Cell Broadcast messages.

A method and apparatus for providing an alarm service in a mobile digital broadcasting system are known from the American application US 2011/0228706. This method involves providing an alarm service by the server, comprising a configured SMT table (Service Map Table) indicating the conditions of an alarm service or lack thereof as well as transmitting an SMT table and an alarm service signal via at least one frequency channel. The method involves receiving an alarm service comprising an SMT table obtained from a broadcasting server by the mobile station (MS), analysing the received SMT table and specifying the alarm service, provided or not provided, and in a situation when the alarm service is provided, receiving it on the proper channel.

A method, a system and a SIM-card for monitoring an alarm path between a radio device and an alarm server are known from the American application US 2006/0003778. The radio device comprises a digital processing unit, activating a computer program unit that monitors an alarm path between a radio device and an alarm server. The computer program unit is stored in the module as a computer program code, which is readable by the digital processing unit of a radio device. The computer program unit comprises coding instructions, which enable the radio device to communicate by means of a digital processing unit with an alarm server in the predetermined time intervals. The radio device also comprises a SIM-card on which the computer program is located, which allows among other things for independence from the producers of the radio devices.

A system, controller and method allowing for effective alerting of mobile subscribers about emergency situations, e.g. weather alert, hostage taking, leak of hazardous substances are known from the document US6745021B1. The system comprises an emergency warning system able to generate information which specifies the geographic area where the emergency situation is taking place. The system also comprises a controller which receives information that specifies the area in danger and is further capable of sending queries and receiving, from a wireless communication network, a list of mobile subscribers located within the area in danger during an emergency situation. The controller can then initialise an emergency notification message, which is sent to at least one mobile subscriber. The emergency notification message may constitute a website, voice message or a short text message (SMS).

A system, device and method utilising Cell Broadcast (CB) protocols for distributing emergency messages to mobile devices is known from the application WO/2011/043975. The messages are transmitted for example by a government organisation. The parameters of an emergency communication are separated and applied to the parameters of a CB message, which can be transmitted to a mobile device. A proper configuration of the mobile device allows for comparison of the contents of the transmitted CB message with a search list and exclusion list, and depending on the results of the comparison the contents of the message are presented to the user.

Also known is the CMAS system (Commercial Mobile Alert System) also called the PLAN (Personal Localized Alerting Network) - it is an alerting network designed to distribute emergency messages to mobile devices. In other words, it is a public safety system which enables the users who own active mobile devices to receive emergency messages.

The known zonal emergency notification systems based on Cell Broadcast require correct configuration of the phone, that is setting up the monitoring of a proper channel. Currently a subscriber who wants to receive the CB channels is forced to properly configure (set up manually) the phone. This significantly affects the range and the number of receivers, which in extremely essential in the case of emergency notifications.

Any changes regarding configuration, entering new, additional information (for example the information about dangers) into mobile terminals (phones) or servers in the prior art are implemented by means of a user interface. The user interface is to be interpreted very widely in this case, as a part of a device responsible for interaction with the user (input/output devices such as keyboard, mouse, monitor or printer), as well as part of the software which deals with management of the input/output devices meant for interaction with the user.

The object of the invention is a solution to the problem of the necessity to perform the configuration of phones already released into the market in a way which allows for receiving the Cell Broadcast channels. This will allow for reaching a significantly larger number of subscribers, and thus the Emergency Services (Fire Department, Police, Emergency Medical Services) will be able to act far more effectively. The use of the solution will affect the increase in penetration of the warning messages, while significantly reducing signalling that uses an SMS notification in the case when a given subscriber has entered the danger zone. There is also a possibility to introduce the solution as a standard for Poland or the whole European Union, that is a unified system operating regardless of the phone model or the configuration thereof, but also independently from the home network operator. Additionally, no modification of the network elements is required.

In the present invention the automatic danger notification method for mobile network subscribers is based on the fact that at the moment when the danger takes place, the type of danger and operations associated therewith are entered into the SIM alarm server by means of a user interface, the SIM alarm server connecting to the GIS system base to determine the Cell_ID identification numbers of the BTS base stations and the transmitted signal being transformed into a distributing signal, the distributing signal being subsequently transmitted to the BSC base station controller, further to the BTS base stations and consecutively to the mobile terminals, the received message being transformed by means of a mobile terminal into an ENVELOPE signal in the mobile terminals by activating the CB message monitoring on the SIM-card, and being further transmitted into the SIM-card, and subsequently, by means of the SIM-card, the signal being transformed depending on the conveyed information and the selected operations being subsequently realised by means of a mobile terminal controlled by an STK signal, displaying a message DISPLAY TEXT, setting up a GPRS session - LAUNCH BROWSER, sending the text message SEND SHORT MESSAGE or setting up a voice call SET UP CALL.

The SIM-card receiving channel monitoring is preferably activated by setting up service no. 25 in the EF SST file and setting up the CB channels in the EF CBMID file on the SIM-card via the OTA platform, by means of encrypted text messages.

It is preferable when the SIM-card receiving channel monitoring is activated by setting up service no. 25 in the EF SST file and setting up the CB channels in the EF CBMID file on the SIM-card by means of production processes.

It is also preferable when the distributing signal is broadcasted by means of BTS base stations in the BCCH signalling logical channel.

It is also preferable when class 2 is assigned to the distributing signal by means of a user interface (MC=2).

Preferably, at least one piece of information is assigned to the message included in the distributing signal by means of a user interface - message identifier, a list of base stations to which the distributing signal is to be transmitted, the repetition period with which the transmitting signal is to be transmitted and the coding scheme.

It is also preferable when by means of a SIM-card the country-identifying MCC number from the SIM-card is compared to the identifying number of the wireless phone network in the given country from the EF LOCI file, and subsequently, by means of a SIM-card, the mobile terminal is configured to receive one of two possible channels - the native language channel or a different language channel.

In the present invention the automatic danger notification system for mobile network subscribers is based on the fact that a SIM alarm server connected to the GIS geographic information system is situated between the BSC base station controller and the broadcasting unit of the alarm service.

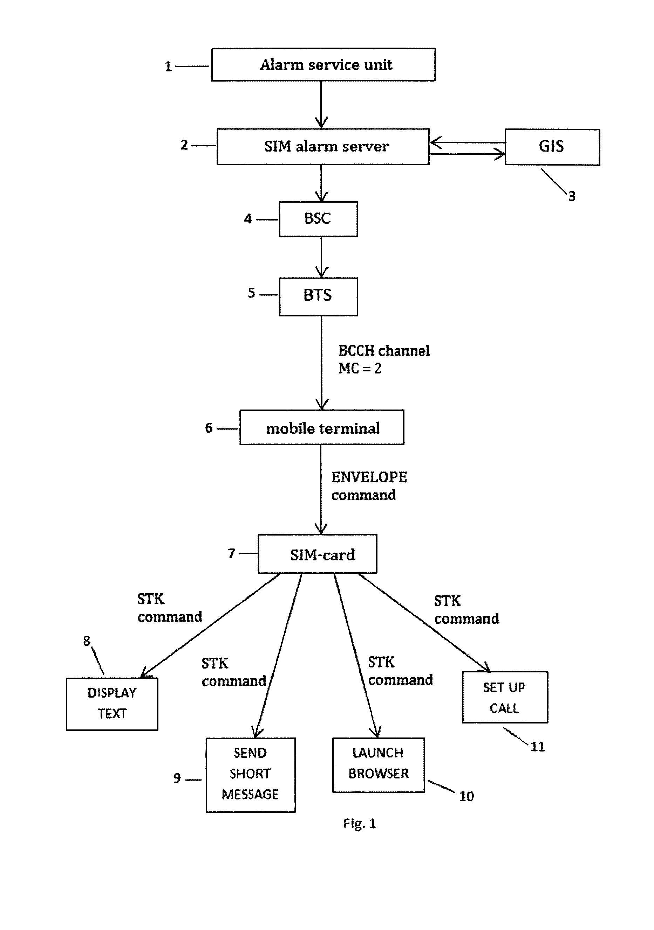

The object of the invention is presented in an embodiment in the drawing, wherein fig. 1 shows a block diagram of the automatic danger notification system for mobile network subscribers, with the individual steps of the method.

The automatic danger notification method for mobile network subscribers of the GSM system, with respect to a specified location, comprises initiating of the setup on the SIM alarm server 2 map, by means of a user interface, by the alarm service unit 1, of the magnitude (degree) and type of the detected danger. In order to create the message and assign it to the specified base station 5 (BTS) it is necessary to set up the Message Identifier, the CellID List of the base stations 5, the Repetition-period, with which the distributing signal is to be broadcasted by the base station 5 and the Data Coding Scheme. For example, the alarm service unit 1 determines, by means of the user interface, a flood and marks it as a major danger. It additionally sets up the type of the message and actions associated therewith, e.g. DISPLAY TEXT 8 (that is, displaying a message regarding the danger in the given area to the subscriber) with the value of bit 8 set up as 1, which means that the signal will be displayed on the display of the mobile terminal 6 until the subscriber's reaction.

In other embodiments it may constitute a GPRS session setting up with a website informing about the danger (LAUNCH BROWSER, 10), sending a text message to the Dispatcher informing them that the given subscriber has entered the danger zone (SEND SHORT MESSAGE, 9) or setting up a voice call e.g. with a voice announcement informing about the emergency (SET UP CALL, 11). All these options are set up in CB communications transmitted to the SIM-card 7 and are independent from the configuration of the phones. The messages (communications) are transmitted on special channels meant for the SIM-card 7 and are standardised within GSM and 3GPP standards. Apart from flood, other examples of danger may constitute a chemical danger (e.g. a factory disaster) or a danger of terrorist attacks during mass events.

The next step of the method is connecting the SIM alarm server 2 to the GIS Geographic Information System base 3 where, by presenting the map and determining the numbers of the base stations 5 (Cell_ID), wherein it is required to set up the signal transmission, the location in which the warning communications will be transmitted is determined. Transformation of the "descriptive" signal into a distributing signal with the proper settings, depending on the degree of danger chosen by the services occurs then in the SIM alarm server 2. The distributing signal is subsequently transmitted to the base station controller 4 (BSC) and further to the proper base stations 5 (BTS). The distributing signal is broadcast by the base station 5 (BTS) in the BCCH signalling logical channel (Broadcast Control Channel) in order to identify the mobile network, connect to the mobile network and "distribute" the CB messages. The signal, by setting up the type of danger by means of a user interface, has an assigned class 2 (MC = 2, Message Class), which informs the mobile terminal 6 that this signal type should be transmitted to the SIM-card 7. Because the mobile terminal 6 only monitors these CB channels, for which the monitoring has been configured remotely by means of OTA platforms (Over The Air, defined in 3GPP TS 03.48 and later standards), that is, by means of encrypted text messages, service no. 25 in the EF SST file (SIM Service Table) is activated on the SIM-card 7 and the receiving channel is set up in the EF CBMID file (Cell Broadcast Message Identifier for Data Download) of the SIM-card 7 - the channels which are to be monitored are determined. Both files may also be properly configured during the production of the SIM-card 7. So configured SIM-card 7 instructs the mobile terminal 6 to monitor the CB communications. When the mobile terminal 6, with the properly configured SIM-card 7, receives the distributing signal transmitted by the base station 5 (BTS), it transforms it into an ENVELOPE signal (defined in GSM TS 11.11) and transmits it to the SIM-card 7. The SIM-card 7 analyses the received signal. If in the distributing signal was the information requesting of the transmission of the DISPLAY TEXT 8 signal with the set up bit 8 by the SIM-card 7 to the terminal, the SIM-card 7 will send the signal to the mobile terminal 6. Sending of the signal is carried out by means of an STK signal (SIM Toll Kit, defined in GSM TS 11.14). Then the mobile terminal 6 will display the disturbing signal regarding the danger transformed by the SIM-card 7 on the display. The signal will remain on the display of the mobile terminal 6 until the subscriber's reaction. In another embodiment, if the information requesting transmission of the SEND SHORT MESSAGE 9 signal by the SIM-card 7 to the mobile terminal 6 was in the distributing signal, the SIM-card 7 will transmit the SEND SHORT MESSAGE 9 signal to the mobile terminal 6 and the mobile terminal 6 will transmit a text message, the contents of which will comprise the distributing signal identifier, to the number indicated by the transmitted, in the given base station 5 (BTS), distributing signal (e.g. to the emergency management centre, in order to inform that a given subscriber has entered the danger zone). If the information requesting transmission of the LAUNCH BROWSER 10 signal by the SIM-card 7 was in the distributing signal, the SIM-card 7 will transmit the LAUNCH BROWSER 10 signal to the mobile terminal 6 and the mobile terminal 6 will activate the "www" browser with a URL defined within the distributing signal (e.g. in order to transmit the information regarding the danger to the subscriber directly from the www server).

In yet another embodiment there is a possibility of an automatic selection of the language of the communication. The CB messages would then be transmitted on two channels. In the native language on the first channel, and, for example, in the English language on the second channel. The SIM-card 7 then compares the MCC country identifying number (Mobile Country Code) from the SIM-card 7 to the wireless phone network identifying number in the given country entered into the EF LOCI file during the registration of the card in the network. Depending on the result of the comparison, the CBMID file is set up to receive one of two possible channels with various languages, e.g. native and English.

The automatic danger notification system for mobile network subscribers comprises a transmitting unit of the alarm service 1 connected to the SIM alarm server 2, which is connected to the GIS geographic information system 3. At the same time the SIM alarm server 2 is connected to the BSC base station controller 4. The BSC base station controller 4 on the other hand, apart from being connected to the SIM alarm server 2, is connected to the MSC mobile system centre (Mobile Services Switching Centre) as well as the BTS base stations 5, which connect to the mobile terminals 6.

## Claims

1. An automatic danger notification method for mobile network subscribers by means of elements of a radio communication network compliant with the GSM system, them being a BSC base station controller, a BTS base station, the GIS geographic information system, a SIM-card, a mobile terminal, ENVELOPE commands and STK commands of the SIM-card, in which information about danger is transmitted to the subscribers, **characterised in that** at the moment when the danger takes place, the type of danger and operations associated therewith are entered into the SIM alarm server (2) by means of a user interface, the SIM alarm server (2) connecting to the GIS system base (3) to determine the Cell_ID identification numbers of the BTS base stations (5) and the transmitted signal being transformed into a distributing signal, the distributing signal being subsequently transmitted to the BSC base station controller (4), further to the BTS base stations (5) and consecutively to the mobile terminals (6), the received message being transformed by means of a mobile terminal into an ENVELOPE signal in the mobile terminals (6) by activating the CB message monitoring on the SIM-card (7), and being further transmitted into the SIM-card (7), and subsequently, by means of the SIM-card (7), the signal being transformed depending on the conveyed information and the selected operations being subsequently realised by means of a mobile terminal (6) controlled by an STK signal, displaying a message DISPLAY TEXT (8), setting up a GPRS session - LAUNCH BROWSER (9), sending the text message SEND SHORT MESSAGE (10) or setting up a voice call SET UP CALL (11).

2. The method according to claim 1, **characterised in that** monitoring of the receiving channel of the SIM-card (7) is activated by setting up service no. 25 in the EF SST file and setting up the CB channels in the EF CBMID file on the SIM-card (7) by the OTA platform by means of encrypted text messages.

3. The method according to claim 1, **characterised in that** monitoring of the receiving channel of the SIM-card (7) is activated by setting up service no. 25 in the EF SST file and setting up the CB channels in the EF CBMID file on the SIM-card (7) by means of production processes.

4. The method according to any one of claims 1 to 3, **characterised in that** the distributing signal is broadcast by means of BTS base stations (5) in the BCCH signalling logical channel.

5. The method according to any one of claims 1 to 4, **characterised in that** class 2 (MC=2) is assigned to the distributing signal by means of a user interface.

6. The method according to any one of claims 1 to 5, **characterised in that**, by means of a user interface, at least one piece of information is assigned to the message comprised in the distributing signal - the message identifier, the list of base stations to which the distributing signal is to be transmitted, the repetition period with which the transmitting signal is to be transmitted and the coding scheme.

7. The method according to any one of claims 1 to 6, **characterised in that** the MCC country identification number from the SIM-card (7) is compared to the wireless phone network identification number in a given country from the EF LOCI file by means of the SIM-card (7), and subsequently the mobile terminal is configured by means of the SIM-card to receive one of two possible channels - the native language channel or a different language channel.

8. The automatic danger notification system for mobile network subscribers, comprising elements of the GSM system, BSC base station controllers, BTS base stations, GIS geographic information system, a SIM-card and a mobile terminal, **characterised in that** a SIM alarm server (2) connected to the GIS geographic information system (3) is located between the BSC base station controller (4) and the transmitting unit of the alarm service (1).
